# EUROPEAN PATENT APPLICATION

(11) **EP 2 712 189 A1**
(43) Date of publication of application: **26.03.2014**
(21) Application number: 12789697.5
(22) Date of filing: 18.05.2012
(51) Int. Cl.: H04N 7/173, H04N 5/00

(54) **PROGRAM SWITCHING CONTROL DEVICE AND PROGRAM**

(30) Priority: 20.05.2011 JP 2011113761
(71) Applicant: Japan Broadcasting Corporation, Shibuya-ku, Tokyo 150-8001 (JP)
(72) Inventor: KIMURA, Toru, Tokyo 157-8510 (JP); MITSUYA, Shigeaki, Tokyo 157-8510 (JP); MATSUMURA, Kinji, Tokyo 157-8510 (JP); BABA, Akitsugu, Tokyo 157-8510 (JP); FUJISAWA, Hiroshi, Tokyo 157-8510 (JP); TAKECHI, Masaru, Tokyo 157-8510 (JP); KANATSUGU, Yasuaki, Tokyo 157-8510 (JP); YAMAMOTO, Makoto, Tokyo 157-8510 (JP); HAMADA, Hiroyuki, Tokyo 157-8510 (JP)
(74) Representative: Fiesser, Gerold Michael
(86) International application number: PCT/JP2012/062764
(87) International publication number: WO 2012/161115

(57) **Abstract**

Programs being viewed by different users can be shared. A terminal (5) obtains, by communicating with a viewer history presence management server (101) that manages viewing histories of multiple users including the user of said terminal, viewing histories of the different users from the viewer history presence management server (101); generates GUI video data, in which more than one symbols respectively corresponding to more than one program content viewed by the other viewers are listed chronologically, on the basis of the viewing histories of the different users; and outputs the video data for presentation. In this case, upon receiving a specific symbol selected by the user among the one or more symbols contained in the GUI video data, the terminal (5) transmits a command to a receiver so as to switch the program to be reproduced at the receiver to the program content which corresponds to the specific symbol received by an operation reception unit (77).

## Description

### TECHNICAL FIELD

This invention relates to a program switching control device having the function of encouraging integration between broadcasting and communications, and a program.

### BACKGROUND ART

In response to recent development in digitalization of broadcasting and broader bandwidths of communications, research and development has been implemented to achieve broadcast/communication integrated service.

According to an assumed aspect of this broadcast/communication integrated service, multiple contents are distributed through different transmission paths, specifically, broadcasting and communications, and the multiple distributed contents are integrated and presented on a receiver such as a digital television.

At present, data broadcasting provides a variety of contents using a language called BML (broadcast markup language) developed for multimedia encoding based on XML (extensible markup language) and having an extended function required for broadcasting service (see patent document 1).

As an example, according to patent document 2, contents broadcasted in the past can be provided by means of video on demand (hereinafter called VOD).

Meanwhile, in order to achieve an execution environment for an application program (hereinafter described as an application) of digital broadcasting, non-patent document 1 uses an application information table (AIT) storing every information relating to the application, and startup information required for the application and the like.
Patent Document 1: Japanese Unexamined Patent Application, Publication No. 2003-60931
Patent Document 1: Japanese Unexamined Patent Application, Publication No. 2009-246815
Non-Patent Document 1: "APPLICATION EXECUTION ENGINE PLATFORM FOR DIGITAL BROADCASTING, ARIB STANDARD, STD-B23 version 1.2," Second Section 10.16, developed on July 29, 2009 by Association of Radio Industries and Business

### DISCLOSURE OF THE INVENTION

### Problems to be Solved by the Invention

Data broadcasting requires every information to be multiplexed on a broadcast wave. This imposes a fixed limitation on the volume of data that can be transmitted on the broadcast wave.

Under these circumstances, implementation of a system has been required that realizes integration of communications imposing no limitation on the volume of transmittable data with broadcasting.

In particular, a receiver in this system can output a program content broadcasted in real time or can output a program content broadcasted in the past by acquiring the past content via communications. As a result, a user is to select, as a target of display, a desirable one from multiple program contents. In this case, convenience will be offered if a desirable content can be selected in consideration of a viewing situation of a different user.

This invention has been made in view of the aforementioned circumstances. In a system that encourages integration between broadcasting and communications, it is an object of this invention to allow a user to select, as a target of display on a receiver, a desirable one from multiple program contents in consideration of a viewing situation of a different user.

### Means for Solving the Problems

A program switching control device according to this invention controls switching of a program content targeted for reproduction by a broadcast/communication integrated receiver terminal that receives a program content currently broadcasted from a broadcasting station on a broadcast wave, and receives a program content broadcasted in the past from a first server via communications through a network and reproduces the program content on the broadcast wave or via the communications. The program switching control device has a structure comprising: first communication unit that communicates with a second server that manages viewing histories of multiple users including a user operating the program switching control device; different user information acquiring unit that acquires a viewing history of a different user from the second server through the first communication unit; image generating unit that generates data about a GUI image based on the viewing history of the different user acquired by the different user information acquiring unit, the GUI image containing one or more symbols listed in chronological order corresponding to one or more respective program contents viewed by the different user; display control unit that exerts control to output and display the data about the GUI image generated by the image generating unit; operation accepting unit that accepts user's operation to select a certain symbol from the one or more symbols contained in the data about the GUI image output and displayed under control of the display control unit; and second communication unit that transmits a command to the broadcast/communication integrated receiver terminal, the command instructing switch of a reproduction target of the broadcast/communication integrated receiver terminal to a program content corresponding to the certain symbol for which the selecting operation made is accepted by the operation accepting unit.

According to this structure, the user can make selection in consideration of a past viewing situation of the different user only by selecting a desirable symbol from those listed in chronological order in the GUI image based on the viewing history of the different user. This offers convenience to the user.

In the program switching control device, the different user information acquiring unit may further acquire presence information indicating a program content currently viewed by the different user from the second server through the first communication unit, and each time the different user information acquiring unit acquires the presence information, the image generating unit may update the data about the GUI image such that the data contains a symbol corresponding to a program content indicated by the presence information.

According to this structure, the user can make selection in consideration not only of a past viewing situation but also of a current viewing situation of the different user only by selecting a desirable symbol from those listed in chronological order in the GUI image based not only of the viewing history but also of the presence information about the different user. This offers convenience to the user.

In this case, each time the presence information about the different user is acquired, the GUI image is updated sequentially. Thus, a current viewing situation of the different user can be seen in real time, thereby offering greater convenience to the user.

In the program switching control device, the program switching control device may be an information processing terminal that operates in cooperation with the broadcast/communication integrated receiver terminal.

According to this structure, the program switching control device operates in cooperation with the broadcast/communication integrated receiver terminal. Thus, the user can view, together with the different user, a program being viewed by the different user only by operating a terminal satisfying the preference of the user.

In the program switching control device, the program switching control device may be built in the broadcast/communication integrated receiver terminal.

This structure eliminates the need of preparing the device separately, thereby encouraging reduction of production cost.

A computer program according to this invention causes a computer to function as the following component. The computer controls switching of a program content targeted for reproduction by a broadcast/communication integrated receiver terminal that receives a program content currently broadcasted from a broadcasting station on a broadcast wave, and receives a program content broadcasted in the past from a first server via communications through a network and reproduces the program content on the broadcast wave or via the communications. The aforementioned component comprises: first communication unit that communicates with a second server that manages viewing histories of multiple users including a user operating a program switching control device; different user information acquiring unit that acquires a viewing history of a different user from the second server through the first communication unit; image generating unit that generates data about a GUI image based on the viewing history of the different user acquired by the different user information acquiring unit, the GUI image containing one or more symbols listed in chronological order corresponding to one or more respective program contents viewed by the different user; display control unit that exerts control to output and display the data about the GUI image generated by the image generating unit; operation accepting unit that accepts user's operation to select a certain symbol from the one or more symbols contained in the data about the GUI image output and displayed under control of the display control unit; and second communication unit that transmits a command to the broadcast/communication integrated receiver terminal, the command instructing switch of a reproduction target of the broadcast/communication integrated receiver terminal to a program content corresponding to the certain symbol the selecting operation made for which is accepted by the operation accepting unit.

According to this structure, the user can make selection in consideration of a past viewing situation of the different user only by selecting a symbol displayed based on the GUI image containing symbols listed in chronological order based on the viewing history of the different user. This offers convenience to the user.

### Effects of the Invention

In a system that encourages integration between broadcasting and communications, this invention allows a user to select, as a target of display on a receiver, a desirable one from multiple program contents in consideration of a viewing situation of a different user.

### BRIEF DESCRIPTION OF THE DRAWINGS

FIG. 1 is an overall configuration diagram showing a broadcast/communication integrated system;
FIG. 2 is a diagram showing a transmission protocol stack of broadcast signals for digital broadcasting;
FIG. 3 is a block diagram showing a functional configuration of a receiver;
FIG. 4 is a diagram showing an example of structure of an AIT described in an XML format;
Fig. 5 is a block diagram showing a functional structure of an output control unit;
Fig. 6 is a flowchart explaining the flow of content reproduction processing performed by the receiver of Fig. 1;
Fig. 7 is a functional block diagram showing a functional structure which is part of a functional structure of a terminal and which is responsible for program selection processing;
Fig. 8 is a diagram explaining the outline of the program selection processing performed to select a program content based on a viewing history or presence information about a different user;
Fig. 9 is a diagram explaining the outline of process to notify a different user's terminal of information about a program content distributed from a service server; and
Fig. 10 is a flowchart explaining the flow of the program selection processing performed by the terminal having the functional structure of Fig. 7.

### EXPLANATION OF REFERENCE NUMERALS

- 1: broadcasting station
- 2: broadcasting antenna
- 3: service server
- 4: receiver
- 5: terminal
- 11: broadcast wave receiving unit
- 12: first separation unit
- 13: broadcast AIT acquisition unit
- 14: communication unit
- 15: second separation unit
- 16: communication AIT acquisition unit
- 17: application execution control unit
- 18: output control unit
- 19: output unit
- 20: cache memory
- 21: memory
- 22: AIT storage unit
- 51: program access unit
- 52: path switching unit
- 53: channel changing unit
- 101: viewer history presence management server
- 151: different user's terminal
- R: remote controller

### PREFERRED MODE FOR CARRYING OUT THE INVENTION

An embodiment of the present invention is hereinafter described with reference to the drawings.

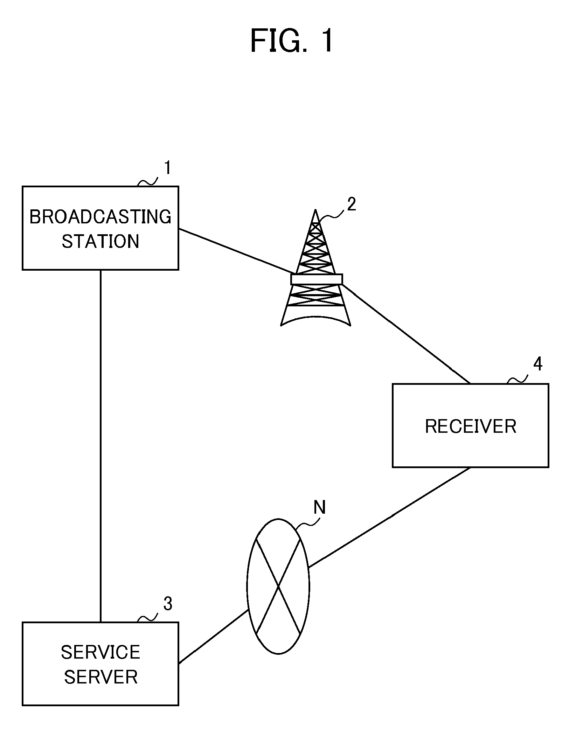

FIG. 1 is an overall configuration diagram of a broadcast/communication integrated system 100 according to the embodiment of the present invention. The broadcast/communication integrated system 100 is configured to include a broadcasting station 1, a broadcasting antenna 2, a service server 3 (distribution server), and a receiver 4(hereinafter also called a broadcast/communication integrated receiver terminal 4 if appropriate).

The broadcasting station 1 provides broadcast services through an Integrated Services Digital Broadcasting (ISDB) scheme, and the service server 3 provides communication services through a communication network N configured by the Internet, or the like; and the broadcast/communication integrated system 100 integrates both services into broadcast/communication integrated services to be provided to a user of the receiver 4. As a result, broadcast/communication integrated service is provided to a user of the receiver 4.

The broadcasting station 1 includes typical broadcasting facilities (not illustrated) for digital broadcasting; the facilities are configured to include a program scheduling facility, a program delivering facility, and a transmitting facility.

The broadcasting station 1 produces content, event information (Event Information Table: EIT), application management information (Application Information Table: AIT) and the like, by the broadcasting facilities. The broadcasting station 1 generates a broadcast signal in the broadcasting facilities by multiplexing such a content, event information, an AIT and the like, modulates the broadcast signal into a broadcast wave, and transmits the broadcast wave through the broadcasting antenna 2.

Such a content in a broadcast wave includes a content containing every video data and every audio data forming a program to be broadcasted according to a broadcast schedule (hereinafter called a program content) and additionally, a content generated asynchronous to a program content such as a content including emergency Earthquake Early Warning (hereinafter called an emergency content), for example.

The event information includes meta-information regarding content, such as program content names, airdate and airtime of the program content, and descriptions of the program content. Hereinafter, event information in a table format will be called an EIT.

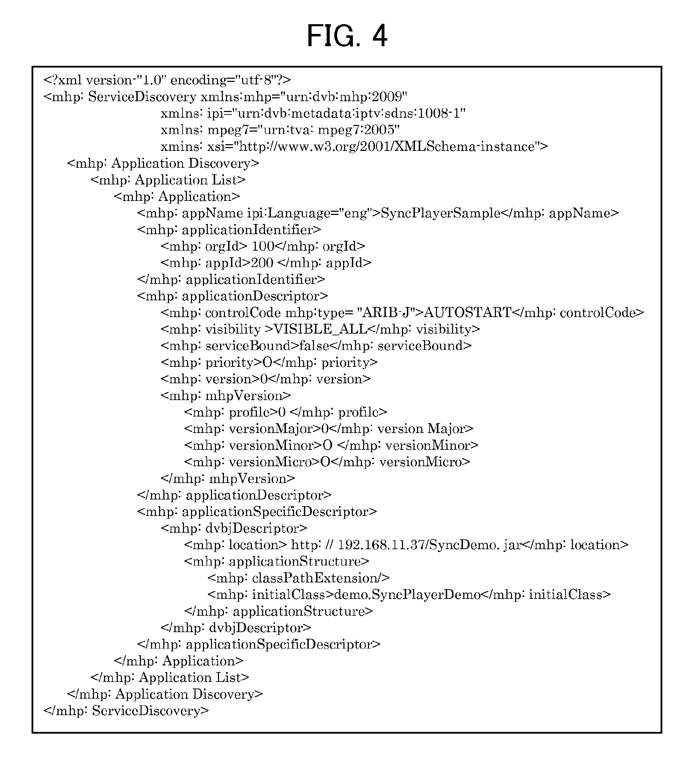

An AIT (application management information) is information to manage one or more applications that can be executed in the receiver 4. An AIT contains individual management information which corresponds to one application or each of two or more applications and which manages this one application or each of these two or more applications. Individual management information contains application ID to identify an application targeted for management, life cycle control information to control the life cycle of this application, location information indicating the location of this application, and the like (see Fig. 4 described later).

A content to be provided to the receiver 4 via an application includes a content to run in cooperation with a program content and a content not to run in cooperation with a program content. The content provided by an application is hereinafter referred to as application content.

The broadcast signals are identical to broadcast signals of conventional digital broadcasting, and are defined according to the standard of ARIB (registered trademark; Association of Radio Industries and Businesses).

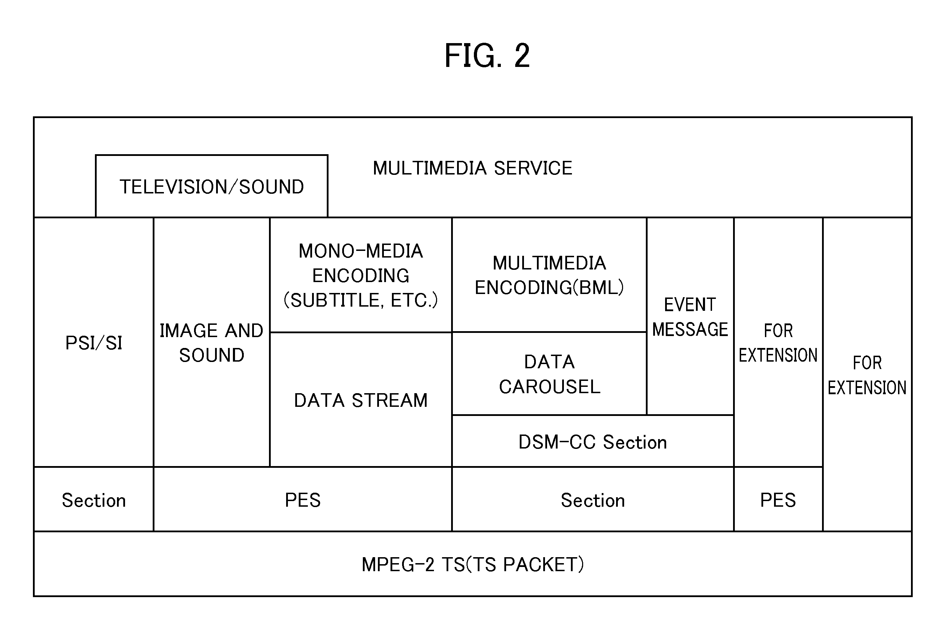

FIG. 2 is a diagram showing a transmission protocol stack of broadcast signals for digital broadcasting. As shown in FIG. 2, various data such as audio data and video data provided through digital broadcasting is stored in a TS packet (transport stream packet) defined according to the international standard of MPEG-2 Systems, and is transmitted by time-division multiplexing.

As shown in FIG. 2, PSI/SI (Program Specific Information/Service Information) is defined with regard to a Section in the TS packet. The PSI/SI includes information indicating a type of data stored in the TS packet or information indicating a type of content. The EIT is included in the SI.

Data transmission through a TS packet is classified into: a data transmission scheme using a Section; and a data transmission scheme (data stream transmission scheme) using a PES (Packetized Elementary Stream) packet.

The data transmission scheme using a Section includes a data carousel transmission scheme, and an event message transmission scheme.

The data carousel transmission scheme is a transmission scheme for repeatedly transmitting a single or plurality of items of data in a constant cycle. Individual data (module) transmitted through the data carousel transmission scheme is given identification information to identify the individual data uniquely. The data carousel transmission scheme is used for the purpose of causing the receiver 4 to acquire individual data at arbitrary timing.

The event message transmission scheme is a scheme for transmitting a trigger signal from the broadcasting station 1 to the receiver 4. The event message transmission scheme is used in a case of transmitting a message with a small volume of data from the broadcasting station 1 to the receiver 4.

The data stream transmission scheme is a transmission scheme for transmitting data as a stream, in which the transmitted data is contained in a PES packet. The data stream transmission scheme is used for transmitting real-time data such as image data, sound data and closed caption data, as well as data that requires synchronization with another stream.

In this regard, an AIT can be transmitted with various methods using a TS packet.

Namely, an AIT can be transmitted by providing a description to an EIT included in SI of a TS packet.

An AIT can be transmitted through the data carousel transmission scheme using a Section. In a case in which an AIT is transmitted through the data carousel transmission scheme, identification information is assigned to a module such that the receiver 4 can recognize the data as the AIT.

An AIT can be transmitted by multiplexing an image and sound of content into a PES.

An AIT can be stored in a TS packet through a description in binary representation or text representation in XML (Extensible Markup Language). In the present embodiment, it is assumed that at least one of the abovementioned transmission schemes is defined in advance as a transmission scheme for an AIT.

BML developed for multimedia encoding based on XML is a standard defined in consideration of compliance with international standards. BML has its basis on xHTML defined by W3C (world wide web consortium) (registered trademark), and uses, as a procedural language, ECMAScript based on Javascript (registered trademark).

Although not shown in the drawings, the service server 3 includes a content distribution server that distributes an application content including a program content already broadcasted in the past, and an application distribution server that distributes various applications to run on the receiver 4.

The service server 3 is communicably connected to the facilities of the broadcasting station 1, and receives program content and metadata of the program content from the broadcasting station 1. Timing of receipt of a program content from the broadcasting station 1 is not specifically limited. Timing of the receipt may coincide with timing of broadcasting of the program content from the broadcasting station 1, or may be deferred for a certain time after completion of the broadcasting from the broadcasting station 1.

In response to acceptance of a request from the receiver 4 to acquire a program content, the service server 3 transmits to the receiver 4 a program content broadcasted in the past from the broadcasting station 1.

Hereinafter, a program content broadcasted in the past from the broadcasting station 1 will be called a past program content, if appropriate. Specifically, unless otherwise specified, the past program contents means a program content broadcasted in the past from the broadcasting station 1.

In other words, the service server 3 can provide service of video on demand (hereinafter called VOD). More specifically, the service server 3 can receive a program content from the broadcasting station 1, perform predetermined editing process on the program content, and start upload by means of VOD (specifically, start the VOD service).

In response to acceptance of a request from the receiver 4 to acquire an application, the service server 3 transmits the application to the receiver 4. When the receiver 4 is executing an application, the service server 3 transmits an application content containing every video data, every audio data and the like to the receiver 4.

Where necessary, the service server 3 multiplexes an AIT on a program content and transmits the multiplexed AIT and the program content to the receiver 4.

In response to acceptance of a request from the receiver 4 to acquire an AIT, the service server 3 transmits the AIT to the receiver 4.

The receiver 4 performs predetermined process on a program content received via broadcasting from the broadcasting station 1 or via communication with the service server 3, thereby outputting video and audio forming the program content in a synchronized manner. The receiver 4 acquires an application if appropriate based on an AIT, and starts and executes the acquired application. As an example, the receiver 4 can acquire an application content from the service server 3 via an application that the receiver 4 is executing, and output the acquired content in integration with a program content. Output of an application content is not always required to integrate with a program content.

The function of the aforementioned receiver 4 is described in detail next.

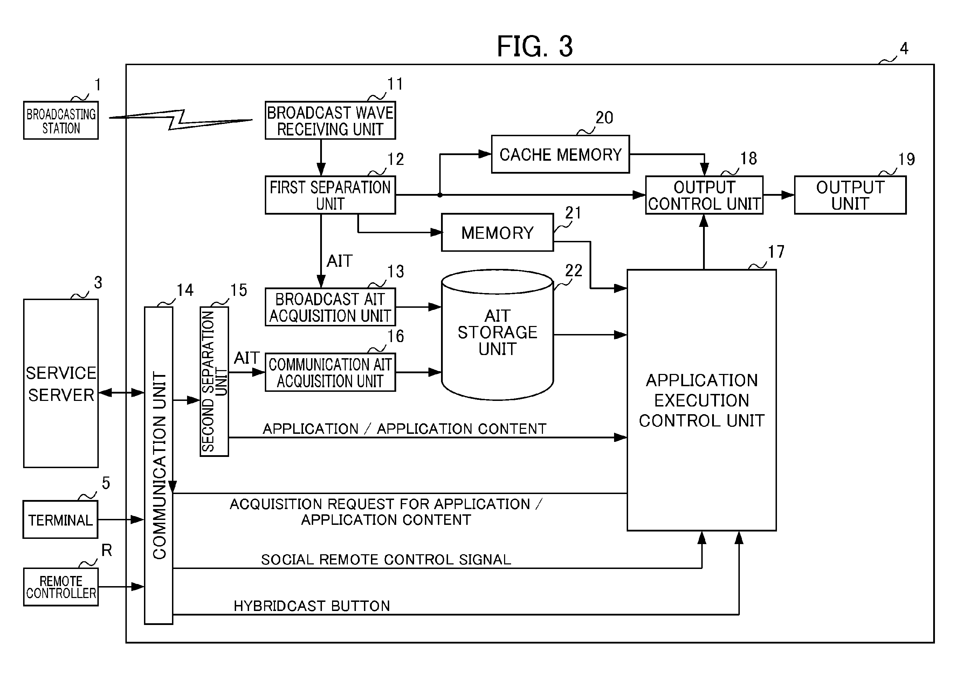

Fig. 3 is a block diagram showing a functional structure of the receiver 4.

The receiver 4 includes a broadcast wave receiving unit 11, a first separation unit 12, a broadcast AIT acquisition unit 13, a communication unit 14, a Second separation unit 15, a communication AIT acquisition unit 16, an application execution control unit 17, an output control unit 18, an output unit 19, a cache memory 20, a memory 21, and an AIT storage unit 22.

The broadcast wave receiving unit 11 receives a broadcast wave transmitted from the broadcasting station 1 through the broadcasting antenna 2, specifically, a broadcast wave including a program content currently broadcasted.

The first separation unit 12 demodulates a broadcast wave received by the broadcast wave receiving unit 11 to extract a broadcast signal, specifically, a TS packet. Then, the first separation unit 12 determines the type of data contained in the TS packet by referring to the PSI/SI of the TS packet, separates and extracts various data such as video data, audio data and an EIT, etc. The first separation unit 12 also separates and extracts an AIT by referring to the section or the PES according to a predetermined way of transmitting the AIT.

Next, the first separation unit 12 outputs to the output control unit 18 every video data and every audio data contained in the PES of the TS packet, specifically, every video data and every audio data forming a program content currently broadcasted.

Every video data and every audio data output from the first separation unit 12 is temporarily stored as data about a past program content into the cache memory 20.

The first separation unit 12 stores the extracted EIT or other various data into the memory 21.

If extracting an AIT, the first separation unit 12 outputs the extracted AIT to the broadcast AIT acquisition unit 13.

The broadcast AIT acquisition unit 13 acquires an AIT output from the first separation unit 12 and stores the acquired AIT into the AIT storage unit 22.

The communication unit 14 transmits and receives various information to and from the service server 3 through the communication network N, receives an operation signal from a remote controller R, and transmits and receives various information to and from a terminal 5 composed for example of a smartphone or a mobile phone.

More specifically, the terminal 5 functions as a social remote controller where necessary to transmit a control signal (hereinafter called a social remote control signal if appropriate) to select a program content designated by user's operation from program contents including those broadcasted in the past and those currently broadcasted, the details of which will be described later. The communication unit 14 receives this social remote control signal and supplies the received signal to the application execution control unit 17 described later.

The Second separation unit 15 determines the type of data transmitted from the service server 3 through the communication network N and received by the communication unit 14, and separates a destination of output of the data based on a result of the determination. As an example, if determining that the received data is an AIT, the Second separation unit 15 outputs this AIT to the communication AIT acquisition unit 16. If determining that the received data is an application, the Second separation unit 15 outputs this application to the application execution control unit 17.

If determining that the received data is a TS packet, the Second separation unit 15 separates and extracts various data such as video data, audio data and an AIT, etc from the TS packet. If extracting an AIT, the Second separation unit 15 outputs this AIT to the communication AIT acquisition unit 16. If extracting data (such as every video data or every audio data forming a past program content) except an AIT, the Second separation unit 15 outputs this data to the application execution control unit 17.

The communication AIT acquisition unit 16 acquires an AIT output from the Second separation unit 15, and stores the acquired AIT into the AIT storage unit 22.

The application execution control unit 17 acquires an application based on an AIT, and controls start and execution of the acquired application. In this case, if executing the application acquires a past program content from the service server 3, the application execution control unit 17 separates every audio data and every video data from this program content, and outputs the separated data to the output control unit 18.

An exemplary structure of an AIT for management of an application, the execution of which is controlled by the application execution control unit 17, is described in detail next.

Fig. 4 is a diagram showing an example of structure of an AIT described in an XML format.

As described above, an AIT contains individual management information which corresponds to one application or each of two or more applications, and which manages this one application or each of these two or more applications.

More specifically, codes described within a renge from a tag <mhp: Application> to a tag </mhp: Application> shown in Fig. 4 correspond to individual management information to manage one application. Individual management information about a different application can be described after the tag </mhp: Application>, so that multiple pieces of individual management information can be described in the AIT.

The codes corresponding to the individual management information include a code corresponding to a tag <mhp: appId> that shows ID (identification information) of the application. A code corresponding to a tag <mhp: controlCode mhp: type = "ARIB-J"> shows life cycle control information about this application. "AUTOSTART" shown in Fig. 4 is life cycle control information that makes the receiver 4 execute the application automatically. A code corresponding to a tag <mhp: location> shows location information indicating the location of this application. The location information of the example of Fig. 4 shows the address of the service server 3 described as the location of the application.

The location information can designate the receiver 4 as the location of the application. In this case, the application execution control unit 17 of this embodiment recognizes an application storage 24 described later as the location of the application, and acquires the application from the application storage 24.

The application execution control unit 17 monitors the AIT storage unit 22. If a new AIT is stored, the application execution control unit 17 refers to control information about a life cycle described in this AIT. If the control information about the life cycle indicates "automatic execution," the application execution control unit 17 recognizes location information described in the AIT as a source from which an application is to be acquired. If the source is the service server 3, for example, the application execution control unit 17 acquires the application from the service server 3 through the communication unit 14 and the Second separation unit 15, and starts and executes the acquired application. In this case, the application is executed automatically in the absence of explicit operation instruction from a user of the receiver 4.

Further, the application execution control unit 17 accepts instruction to execute an application from a user of the receiver 4 through the remote controller R. As an example, the remote controller R has a Hybridcast (registered trademark) button. In response to press of the Hybridcast button by the user of the receiver 4, the application execution control unit 17 accepts instruction to execute a menu screen on which selection of the application to be executed is accepted. In response to acceptance of the instruction to execute the menu screen, the application execution control unit 17 refers to the AIT storage unit 22 to identify an AIT corresponding to an executable application. Then, the application execution control unit 17 generates image data about a menu from which an application corresponding to the identified AIT can be selected and outputs the resultant image data to the output control unit 18, thereby presenting this menu on a display of the output unit 19. If accepting operation to select an application made by the user of the receiver 4 through the remote controller R, the application execution control unit 17 acquires the application by referring to location information about this application described in the AIT, and starts and executes the application.

The application execution control unit 17 acquires, where necessary, an application content such as a past program content about an application being executed from the service server 3. Then, the application execution control unit 17 outputs to the output control unit 18 every video data and every audio data forming the application content (past program content). If the application being executed is an application that provides an application content to run in cooperation with a program content, every video data and every audio data forming the application content are output in cooperation with every video data and every audio data forming the program content.

The application execution control unit 17 controls the life cycle of an application being executed based on an AIT in the AIT storage unit 22, more specifically, based on life cycle control information as part of individual management information in this AIT. If the life cycle control information about the application indicates "completion," for example, the application execution control unit 17 completes the application.

The output control unit 18 outputs to the output unit 19 every video data and every audio data output from the first separation unit 12, specifically, a program content currently broadcasted, in a synchronized manner. The output control unit 18 outputs to the output unit 19 every video data and every audio data output from the application execution control unit 17, specifically, a past program content, in a synchronized manner.

The output unit 19 is formed as a display, a speaker and the like. The output unit 19 outputs every video data and every audio data output from the first separation unit 12 in a synchronized manner to the outside.

The memory 21 stores meta-information about a program content such as an EIT and other information of various types.

The AIT storage unit 22 stores various AITs acquired by the broadcast AIT acquisition unit 13 or the communication AIT acquisition unit 16.

The output control unit 18 forming part of the receiver 4 having the aforementioned functional structure can perform content reproduction processing.

The content reproduction processing is a series of processes performed to reproduce a program content selected by a user from program contents including those broadcasted in the past and those currently broadcasted from the broadcasting station 1.

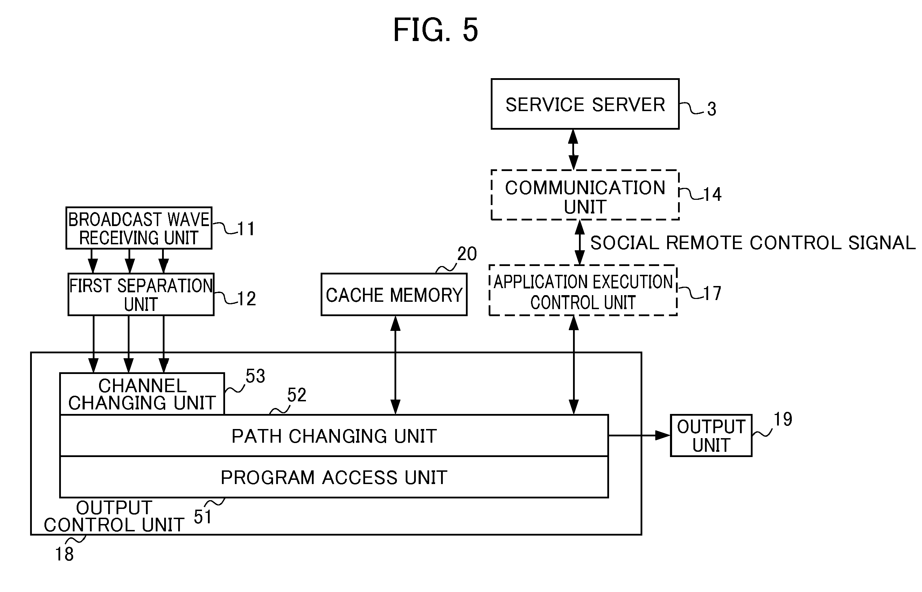

Fig. 5 is a block diagram showing a functional structure of the output control unit 18 to realize the function of performing the content reproduction processing.

The output control unit 18 includes a program access unit 51, a path switching unit 52, and a channel changing unit 53.

Based on a result selected by a user as a program content targeted for reproduction (hereinafter called a program selection result), the program access unit 51 selects one from the broadcast wave receiving unit 11, the service server 3 connected to the communication unit 14 on a network, and the cache memory 20 as a destination of access of the reproduction target (location of the program content expressed by URI, for example).

In this embodiment, a program selection result is given in a social remote control signal transmitted from the terminal 5 functioning as a social remote controller described later. However, this embodiment is not the only way of giving a program selection result. Although not shown in the drawings, the output control unit 18 may make the output unit 19 output and display a table of programs (EPG) including those broadcasted in the past and those currently broadcasted, and a user may select a desirable program content by operating the remote controller R, for example. In this case, the program selection result may be given in an operation signal transmitted from the remote controller R.

If acquiring a program selection result designating a program content currently broadcasted as a reproduction target, the program access unit 51 selects the broadcast wave receiving unit 11 as a destination of access of the reproduction target.

In contrast, if acquiring a program selection result designating a program content broadcasted in the past as a reproduction target, the program access unit 51 selects, in principle, the service server 3 as a destination of access of the reproduction target.

This allows a user to view multiple contents distributed through different transmission paths, specifically, broadcasting and communications without being aware of the difference between the transmission paths.

Here, if a program content broadcasted in the past is designated as a reproduction target, the service server 3 is selected as a destination of access of the reproduction target in principle. The reason therefor is that, if a program content designated as a reproduction target based on a program selection result is one broadcasted from the broadcasting station 1 in the past only a little while (such as few minutes) before the present time, it is probable that this program content has not been uploaded to the service server 3.

Hence, if acquiring a program selection result designating a program content broadcasted in the past as a reproduction target, the program access unit 51 selects the service server 3 as a destination of access of the reproduction target where the service server 3 can distribute the program content. In contrast, if the service server 3 cannot distribute the program content, the program access unit 51 selects the cache memory 20 as a target of access of the reproduction target.

This allows a user to view program contents seamlessly including those broadcasted in the past and those currently broadcasted without being aware of the difference between the transmission paths.

Storage time of a program content in the cache memory 20 is not specifically limited.

As an example, all program contents may be stored for the same time in the cache memory 20. Meanwhile, in this embodiment, storage time is determined variably according to the number of views of a program content on the air (being broadcasted from the broadcasting station 1) (the number of users currently viewing the program content) or the rating of this program content.

More specifically, the number of views or the rating of a program content on the air can be seen from information given from the receiver terminal 4 of each user to the service server 3 (or to a viewer history presence management server 101 described later).

As an example, it is expected that a program content with a large number of views or a high rating will lead to a large number of viewers to view missing part of the program content immediately after broadcasting of the program content is completed. The service server 3 may defer timing of upload of such a program content by means of VOD. Or, after such a program content is uploaded by means of VOD, the program access unit 51 of the receiver 4 may select not the service server 3 but the cache memory 20 as a destination of access of a reproduction target. These may be achieved by storing a program content with a large number of views or a high rating for long time in the cache memory 20. Specifically, the following arbitrary function may be employed that uses the number of views or a rating as an input parameter: storage time in the cache memory 20 = f (the number of views or a rating) .

Timing of erasure of a program content in the cache memory 20 is not specifically limited. As an example, such a program content in the cache memory 20 may be erased in compliance with certain timing after a program content is uploaded by means of VOD, or with timing of elapse of certain storage time, for example.

The path switching unit 52 switches a path along which a program content targeted for reproduction is acquired to a destination of access selected by the program access unit 51, and acquires the program content from the switched destination of access.

If the broadcast wave receiving unit 11 can receive broadcast waves from multiple broadcasting stations 1, the channel changing unit 53 recognizes a channel assigned to a broadcasting station 1 currently broadcasting a program content selected as a reproduction target, acquires the program content broadcasted from the broadcasting station 1 assigned with this channel, and supplies the program content to the path switching unit 52.

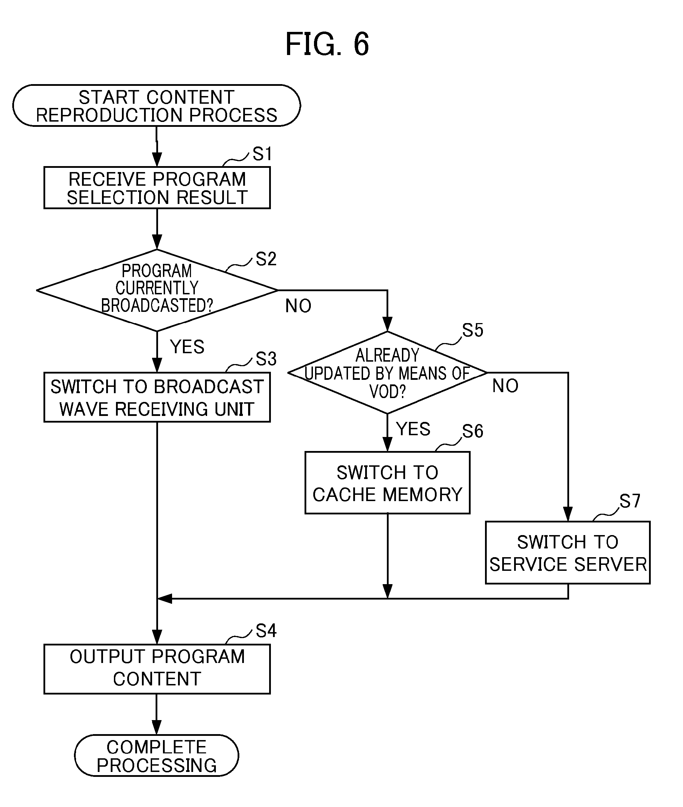

The content reproduction processing performed by the receiver 4 having the functional structure of Fig. 3 or 5 is described next by referring to Fig. 6.

Fig. 6 is a flowchart explaining the flow of the content reproduction processing performed by the receiver 4 of Fig. 1 having the functional structure of Fig. 3 or 5.

In this embodiment, the content reproduction processing is performed each time a user operates the terminal 5 (social remote controller) and a program selection result obtained in response to this operation is transmitted to the receiver 4.

In step S1, the program access unit 51 receives a program selection result transmitted through the communication unit 14.

In step S2, the program access unit 51 determines whether a program content received by the process of step S1 is one currently broadcasted or not.

If the selected program content is one currently broadcasted, the determination of step S2 becomes YES and then the processing proceeds to step S3.

In step S3, the program access unit 51 selects the broadcast wave receiving unit 11 as a destination of access of a reproduction target. The path switching unit 52 switches a path along which the program content targeted for reproduction is acquired to the broadcast wave receiving unit 11.

In step S4, the path switching unit 52 acquires a program content separated by the first separation unit 12 from a broadcast signal which is one of broadcast signals received by the broadcast wave receiving unit 11 and which corresponds to a channel changed by the channel changing unit 53, and makes the output unit 19 output the acquired program content.

Then, the reproduction processing is completed.

In contrast, if the user selects a past program content, the determination of step S2 becomes NO and then the processing proceeds to step S5.

In step S5, the program access unit 51 determines whether the program content identified (selected) by the program selection result received by the process of step S1 has already been uploaded by means of VOD or not.

If the user selects the past program content and this past program content has not been uploaded yet by means of VOD, the determination of step S5 becomes NO and then the processing proceeds to step S6.

In step S6, the program access unit 51 selects the cache memory 20 as a destination of access of the reproduction target. The path switching unit 52 switches the path along which the program content targeted for reproduction is acquired to the cache memory 20.

In step S4, the path switching unit 52 acquires the past program content temporarily accumulated in the cache memory 20 and makes the output unit 19 output the acquired program content.

Then, the reproduction processing is completed.

In contrast, if the user selects the past program contents and this past program content has been uploaded already by means of VOD, the determination of step S5 becomes YES and then the processing proceeds to step S7.

In step S7, the program access unit 51 selects the service server 3 (communication unit 14) as a destination of access of the reproduction target. The path switching unit 52 switches the path along which the program content targeted for reproduction is acquired to the service server 3 (communication unit 14). ]

In step S4, the path switching unit 52 acquires through the communication unit 14 and the application execution control unit 17 the past program content distributed from the service server 3 and makes the output unit 19 output the acquired program content.

Then, the reproduction processing is completed.

The terminal 5 functioning as a social remote controller is described next. The social remote controller is a remote controller with which a past program or a currently viewed program can be selected based on a viewing history of a different user.

Hereinafter, a series of processes performed by the terminal 5 functioning as this social remote controller to select a program content targeted for reproduction based on user's operation will be called program selection processing.

Specifically, in the program selection processing, based on a viewing history of a different user or information indicating what is viewed by this user, multiple icons (symbols) are displayed corresponding to respective program contents viewed in the past or currently viewed by the different user. If a certain icon is selected from these icons by user's operation, a control signal containing ID of a program content corresponding to the selected icon is transmitted as a social remote control signal to the receiver 4.

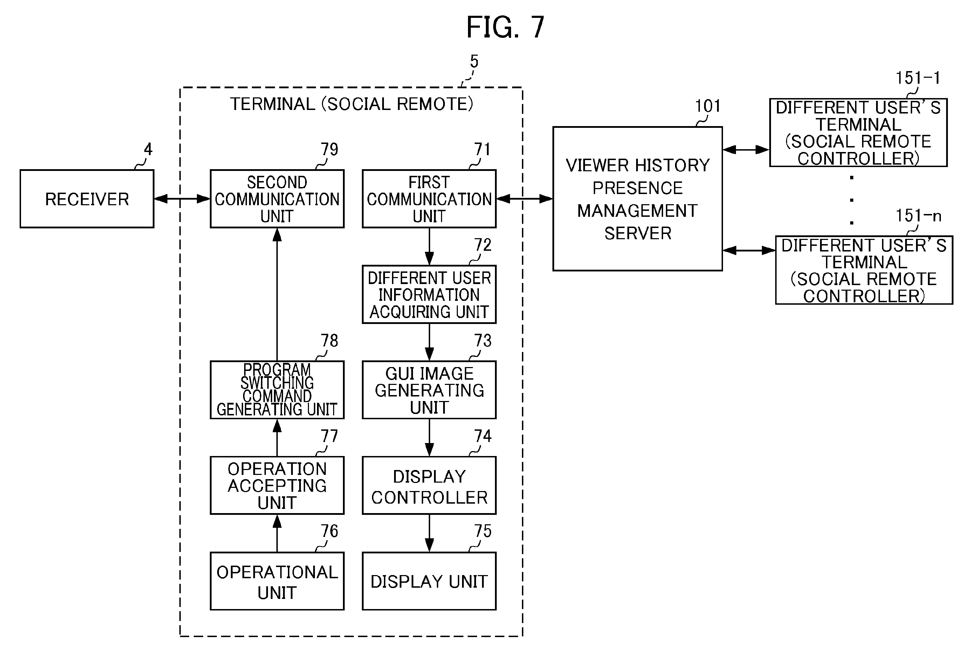

Fig. 7 is a functional block diagram showing a functional structure of the terminal 5 responsible for the program selection processing.

The terminal 5 functioning as a social remote controller includes a first communication unit 71, a different user information acquiring unit 72, a GUI image generating unit 73, a display controller 74, a display unit 75, an operational unit 76, an operation accepting unit 77, a program switching command generating unit 78, and a second communication unit 79.

The terminal 5 operated by a user of the receiver 4 (hereinafter called a user A) and terminals 151-1 to 151-n (n is the number of users) operated by n different users B, C, D, ... n (n is an integer of two or more) are connected to each other on a network server not shown in the drawings. Specifically, the network server provides a social networking service (hereinafter called SNS) that encourages communications between the user A and the different users B to n. The terminal 5 of the user A and each of the terminals 151-1 to 151-n of the different users B to n are connected to each other on the SNS. Hereinafter, where distinction between the terminals 151-1 to 151-n is not necessary, these terminals will simply be called a "different user's terminal 151" collectively. The terminal of the user A and the different user's terminal 151 each transmit presence information described later to the viewer history presence management server 101 through a network server (not shown in the drawings ) .

In this embodiment, the user A of the receiver 4 follows the different users B to n and is followed by these users B to n. Following a different user on the SNS means "saving this user as a favorite," for example.

Specifically, in this embodiment, the user A follows the different users B to n as favorites from the viewpoint of the user A. Thus, presence information transmitted from the users B to n saved as favorites is presented on the terminal 5 of the user A.

Meanwhile, the different users B to n do not necessarily save the user A as their favorites. However, for the sake of convenience of description, it is assumed here that the different users B to n follow the user A as their favorites. In this case, at least presence information transmitted from the user A is presented on the terminals 151-1 to 151-n of the different users B to n.

Specifically, presence information about the user A and the different users B to n is transmitted, if appropriate, to the viewer history presence management server 101 from each of the terminal 5 and the terminals 151-1 to 151-n of the different users, and is transmitted to a terminal different from the source of the transmission.

Presence information is information indicating a current status of each user such as online, offline, away or busy, for example. In this embodiment, the presence information means information capable of identifying a currently viewed program.

Hence, regarding presence information at the present time about a certain user, if new presence information is transmitted from the terminal 5 or 151 of this user, the viewer history presence management server 101 manages this new presence information as part of a viewing history (latest viewing history) of this user. Specifically, a viewing history is a history containing identifiers which can uniquely identify corresponding program contents viewed by each user from the past to a time point immediately before and which are arranged in chronological order, specifically, in what is called a timeline.

In this embodiment, a viewing history is managed by the viewer history presence management server 101, to which this invention is not intended to be limited. As an example, each of the terminal 5 of the user A and the terminals 151-1 to 151-n of the different users B to n may manage a viewing history of a corresponding one of the users A to n. When the viewing history is accumulated to a certain amount, the viewing history may be transmitted to the viewer history presence management server 101.

In this embodiment, presence information and a viewing history are isolated explicitly as described above. However, they are not actually required to be isolated so explicitly.

The first communication unit 71 of the user A transmits presence information about the user A to the viewer history presence management server 101. The first communication unit 71 acquires a viewing history and presence information about the different users B to n transmitted from the terminals 151-1 to 151-n of the different users B to n and received by the viewer history presence management server 101.

The different user information acquiring unit 72 acquires, as different user information, a viewing history or presence information about the different users B to n from the viewer history presence management server 101 through the first communication unit 71, and supplies the acquired viewing history or the presence information to the GUI image generating unit 73.

Based on different user information acquired by the different user information acquiring unit 72, the GUI image generating unit 73 generates data about a GUI (graphical user interface) image containing one or more symbols listed in chronological order corresponding to one or more respective program contents currently viewed or viewed in the past by the different users B to n. Hereinafter, such a GUI image will be called a GUI image for social remote controller.

A symbol contained in the GUI image for social remote controller is required only to have a shape that can be recognized visually by a user and is not specifically limited. In this embodiment, an icon allowing visual recognition of a corresponding program content is employed.

More specifically, the GUI image generating unit 73 generates icons corresponding to respective program contents currently viewed or viewed in the past by the different users B to n arranged in what is called a timeline format for each of the different users B to n. In this case, icons corresponding to respective program contents currently viewed or viewed in the past by the user A himself or herself may be generated. The GUI image generating unit 73 generates data about the GUI image for social remote controller containing the aforementioned listed icons, and supplies the data to the display controller 74.

Timing of update of the data about the GUI image for social remote controller is not specifically limited. In this embodiment, this data is updated each time the different user information acquiring unit 72 acquires new presence information. As a result, the GUI image for social remote controller becomes an image containing icons updated substantially in real time as occasion arises.

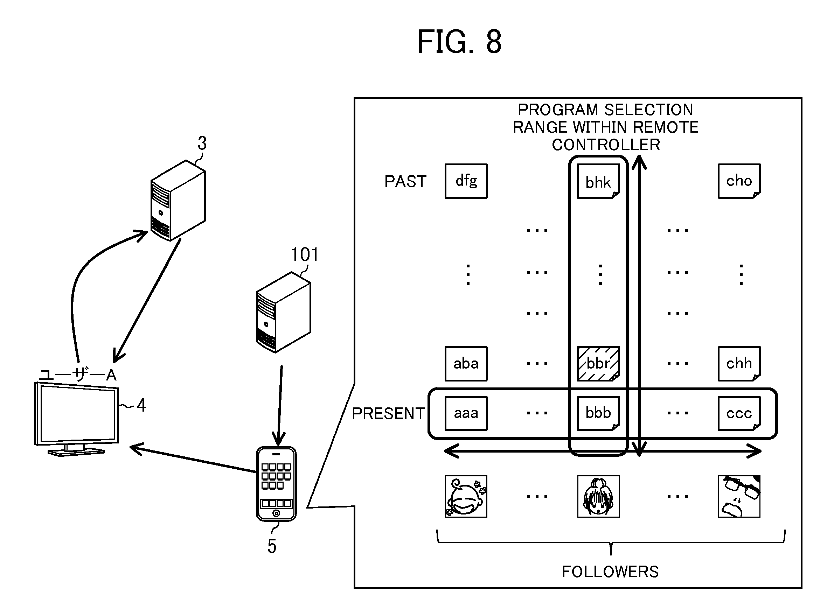

The display controller 74 exerts control to make the display unit 75 display a GUI image for social remote controller (image of Fig. 8 indicated as "PROGRAM SELECTION RANGE WITHIN REMOTE CONTROLLER" described later) corresponding to data generated by the GUI image generating unit 73.

The operational unit 76 is composed of a capacitive touch panel with elongated capacitive sensors arranged vertically and horizontally, for example. Specifically, the touch panel as the operational unit 76 is arranged to be stacked on a display surface of the display unit 75, and becomes a target of contact or operation of making close contact by an object such as a finger of the user A, specifically, becomes a target of touch operation. Specifically, of multiple icons in a GUI image for social remote controller displayed on the display unit 75, the user A touches an icon of a program content desired as a display target (more precisely, touches part of the operational unit 76 as the touch panel stacked in the position of this icon). As a result, the user A can select this program content as a display target.

The operation accepting unit 77 accepts touch operation on the operational unit 76 by a user, recognizes an icon (symbol) selected as a result of the touch operation, and notifies the program switching command generating unit 78 of a program content corresponding to the selected icon.

The program switching command generating unit 78 generates information containing ID of a program content as a command instructing switch to this program content notified by the operation accepting unit 77.

The second communication unit 79 transmits a command (ID of this program content) instructing switch to this program content as a social remote control signal to the receiver 4.

As described above, the program access unit 51 (Fig. 5) of the receiver 4 having received a social remote control signal (command instructing switch of a program content) selects a destination of access of a display target according to a program content identified by this command. Then, the path switching unit 52 (Fig. 5) switches a path along which the program content targeted for reproduction is acquired to the destination of access selected by the program access unit 51, acquires the program content from the switched destination of access, and makes the output unit 19 output the acquired content.

The outline of the program selection processing performed to select a program content based on a viewing history or presence information about the different users B to n is described next.

Fig. 8 is a diagram explaining the outline of the program selection processing performed to select a program content based on a viewing history or presence information about the different users B to n.

First, the terminal 5 functioning as a social remote controller acquires a viewing history or presence information about the different users B to n from the viewer history presence management server 101, and displays a GUI image for social remote controller including a list of one or more symbols (in the example of Fig. 8, icons with program names) corresponding to respective program contents currently viewed or viewed in the past by the different users B to n. In the example of Fig. 8, a GUI image for social remote controller shown below the indication "GROGRAM SELECTION RANGE WITHIN REMOTE CONTROLLER" is displayed.

As shown in Fig. 8, a vertical axis of Fig. 8 is a time axis, and time proceeds in a direction from top to bottom. A horizontal axis of Fig. 8 is an axis showing the different users B to n. Specifically, icons to the right of an indication "PRESENT" indicate program contents currently viewed by the different users B to n. Icons shown above each of these icons indicate past program contents viewed so far by the different users B to n. An upper icon means an older program content in terms of time.

As described, the icons to the right of the indication "PRESENT" indicate program contents currently viewed by the different users B to n. Thus, each time presence information about the different users B to n is acquired, icons in the GUI image are updated. Specifically, the representation of the GUI image for social remote controller is updated such that each icon of the different users B to n shifts one by one toward the top.

Of these icons in the GUI image for social remote controller, the user A touches an icon corresponding to a program content desired as a display target (more precisely, touches the operational unit 76 as the touch panel stacked above this icon). As a result, the user A can select this desirable program content.

The terminal 5 accepts this touch operation to recognize the selected symbol, generates information containing ID of a program content as a command instructing switch to this program content corresponding to this symbol, and transmits the generated information to the receiver 4.

In the example of Fig. 8, contact operation is made on an icon ie corresponding to a program content bbr viewed by a different user E immediately before (currently viewed program content at the time before the last update is made), for example. In this case, information containing ID of the program content bbr is transmitted to the receiver 4 as a command instructing switch to the program content bbr.

Communication between the receiver 4 and the terminal 5 can be established for example by a system such as a domestic LAN (local area network) or Bluetooth (registered trademark). These are not the only style of the communication but infrared communication and a WAN (wide area network) are also applicable, for example. A protocol used for the communication is not specifically limited. This embodiment uses UDP and UPNP. This is because these protocol allow transmission of URI information.

Upon receiving a command from the terminal 5, the program access unit 51 (Fig. 5) of the receiver 4 selects a destination of access of a display target according to a program content identified by this command. In the example of Fig. 8, the given command instructs switch to the past program content bbr. Thus, the program access unit 51 selects the service server 3 as a destination of access of the display target. The path switching unit 52 (Fig. 5) switches a path along which the program content targeted for reproduction is acquired to the communication unit 14. Then, the path switching unit 52 acquires through the communication unit 14 the program content (program content bbr in the aforementioned example) having been transmitted from the service server 3 through the network N, and makes the output unit 19 output this program content.

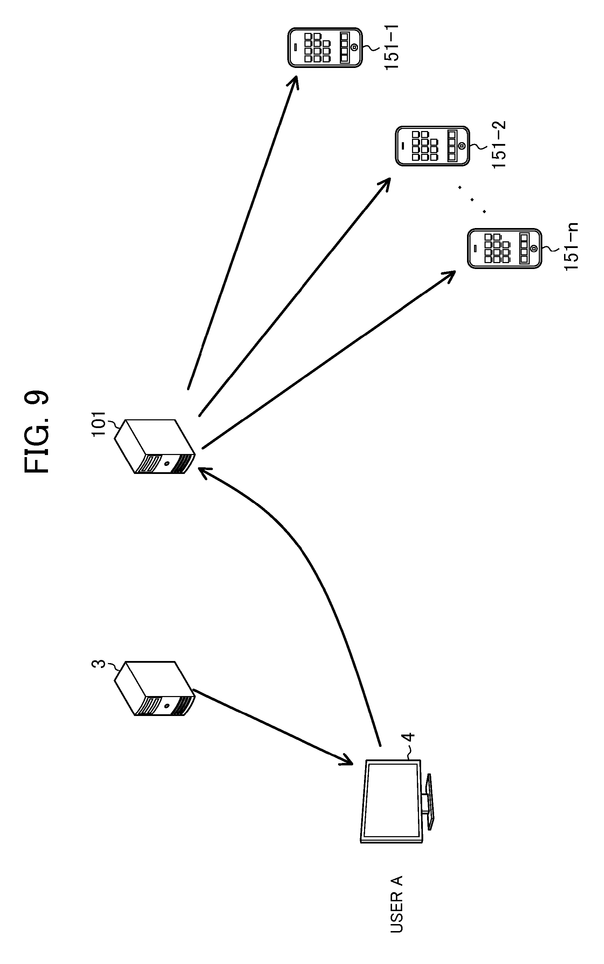

Fig. 9 is a diagram explaining the outline of process to notify the different user's terminal 151 of information about a program content distributed from the service server 3 in the aforementioned manner.

In response to a request from the receiver 4, the service server 3 distributes a program content (in the example of Fig. 8, the program content bbr) to the receiver 4. The receiver 4 receives this program content. In this case, the user A starts viewing this program content. Specifically, at this moment, this program content is a program content currently viewed by the user A.

The receiver 4 transmits information about this program content (in the example of Fig. 8, the program content bbr) as presence information about the user A to the viewer history presence management server 101.

Each time the user A starts viewing a new program content, the receiver 4 recognizes this new program content as a currently viewed program content, and transmits to the viewer history presence management server 101 information about this program content as presence information. As a result, presence information managed by the viewer history presence management server 101 is always updated to the latest information.

The program content currently viewed in this case may be defined in a format such as XML.

Each time information about a new program content is received from the receiver 4, the viewer history presence management server 101 transmits this information as presence information about the user A of the receiver 4 to all the terminals 151-1 to 151-n of different users following the user A.

In this case, if the terminals 151-1 to 151-n of the different users function as social remote controller, they update a GUI image for social remote controller at the time when the latest presence information about the user A is notified.

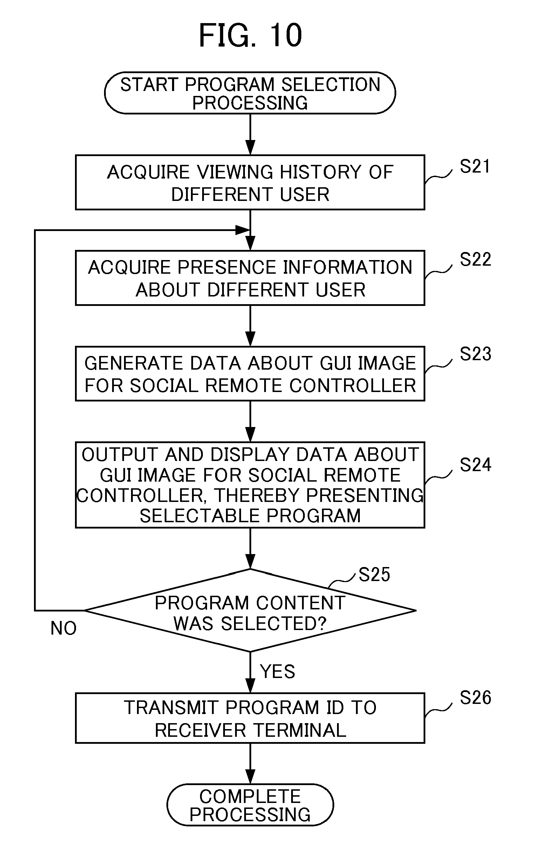

The program selection processing performed by the terminal 5 is described in detail next by referring to Fig. 10.

Fig. 10 is a flowchart explaining the flow of the program selection processing performed by the terminal 5.

When the terminal 5 becomes capable of operating in integration with the receiver 4, the program selection processing is started in response to user's instructive operation functioning as a social button.

In step S21, the different user information acquiring unit 72 acquires a viewing history of a different user from the viewer history presence management server 101 through the first communication unit 71.

In step S22, the different user information acquiring unit 72 acquires presence information indicating a program content currently viewed by a different user from the viewer history presence management server 101 through the first communication unit 71.

In step S23, based on the viewing history of the different user acquired by the process of step S21 and the presence information acquired by the process of step S22, the GUI image generating unit 73 generates data about a GUI image for social remote controller.

In step S24, the display controller 74 outputs and displays the data about a GUI image for social remote controller generated by the GUI image generating unit 73, thereby presenting selectable program contents. Specifically, the GUI image for social remote controller contains icons selectable by touch operation and corresponding to program contents currently viewed or viewed so far in the past by the different user, thereby displaying the selectable program contents.

In step S25, the operation accepting unit 77 determines whether a certain program content was selected from the programs presented by the process of step S24 or not. More specifically, the operation accepting unit 77 determines whether touch operation was made on one of the icons (symbols) contained in the GUI image for social remote controller or not, thereby determining if the certain program content was selected or not.

Accordingly, if touch operation was not made on any of the icons, the determination of step S25 becomes NO. Then, the processing returns to step S22 to repeat the subsequent processes. Specifically, a loop from step S22 to step S25 is repeated until touch operation on an icon is made. Each time the loop is executed, presence information about a different user is acquired and presence information acquired previously becomes part of a viewing history of this different user. Thus, icons contained in the GUI image for social remote controller are updated sequentially.

If a certain icon is selected thereafter, the determination of step S25 becomes YES and the processing proceeds to step S26.

In step S26, the second communication unit 79 transmits to the receiver 4 a command instructing switching of a target of reproduction by the receiver 4 to the program content selected in step S25. The program selection processing is completed after completion of this process.

This embodiment achieves the following effects.
(1) A user can make selection in consideration of a past viewing situation of a different user only by selecting a symbol (such as an icon) displayed based on a GUI image for social remote controller containing symbols listed in chronological order based on a viewing history of the different user. This offers convenience to the user.
(2) A user can make selection in consideration not only of a past viewing situation but also of a current viewing situation of a different user only by selecting a symbol (such as an icon) displayed based on a GUI image for social remote controller containing symbols listed in chronological order based not only of a viewing history but also of presence information about the different user. This offers convenience to the user.

In this case, each time presence information about the different user is acquired, the GUI image is updated sequentially. Thus, a current viewing situation of the different user can be seen in real time, thereby offering greater convenience to the user.

This invention is not limited to the aforementioned embodiment but it can embrace variations, modifications and the like devised within a range that achieves the object of this invention.

As an example, a smartphone is assumed as the terminal 5 functioning as a social remote controller in the aforementioned embodiment. Thus, touch operation on a touch panel is employed as operation on the terminal 5, to which this invention is not intended to be limited specifically.

As an example, where a GUI image for social remote controller such as that of Fig. 8 is displayed, in order to select an arbitrary one icon, an arrow key to vertically or horizontally move the icon to be selected (in the example of Fig. 8, highlighted icon) and a channel key or the like to make decisive instructive operation may be used, for example.

As an example, if distribution from the service server 3 is determined to be impossible, specifically if upload by means of VOD is not completed, the cache memory 20 becomes a destination of access in the aforementioned embodiment, to which this invention is not intended to be limited specifically.

Likewise, if distribution from the service server 3 is determined to be possible, specifically if upload by means of VOD is completed, the cache memory 20 becomes a destination of access in the aforementioned embodiment, to which this invention is not intended to be limited specifically. As an example, if a program content is stored in the cache memory 20, the receiver 4 may select the cache memory 20 as a destination of access, even if distribution from the service server 3 is determined to be possible.

As an example, in the aforementioned embodiment, users following each other become targets of acquisition of presence information or a viewing history, to which this invention is not intended to be limited specifically. Specifically, a target of acquisition of presence information or a viewing history may be a specific person such as an entertainer connected on the SNS or may be selected randomly from multiple users connected on the network.

As an example, in the aforementioned example, a symbol contained in a GUI image for social remote controller is an icon corresponding to a program content currently viewed or viewed in the past by a different user as a follower, to which this invention is not intended to be limited specifically. This symbol may be a symbol corresponding to a recommended program content among one or more program contents viewed by a different user, for example. The recommended program content means a program content with a high rating or a program content with a high rating determined by the sex, age or preference of users, for example. A GUI image for social remote controller may contain an icon corresponding to a program content that satisfies a specific requirement to be satisfied if the program content is viewed by the largest number of viewers at a given time, for example.

As an example, in the aforementioned embodiment, the terminal 5 has the function of a social remote controller (function of a program switching control device), to which this invention is not intended to be limited specifically. The receiver 4 itself may have this function. This may be achieved by providing the receiver 4 with the functional structure of the terminal 5 shown in Fig. 7.

As an example, a GUI image for social remote controller may contain only an icon corresponding to a program content viewed in the past without containing a currently viewed program content. Conversely, a GUI image for social remote controller may contain only a currently viewed program content without containing an icon corresponding to a program content viewed in the past.

As an example, a GUI image for social remote controller may contain only an icon corresponding to a program content viewed in the past without containing a currently viewed program content. Conversely, a GUI image for social remote controller may contain only a currently viewed program content without containing an icon corresponding to a program content viewed in the past.

The description of this embodiment is mainly intended for the structure and operation of a program switching control device, to which this invention is not intended to be limited. Where each component is provided and a desirable one is to be selected from multiple program contents as a target of display on a receiver, this invention may also be configured as a method to select a desirable program content in consideration of a viewing situation of a different user and a program.

This invention may also be implemented by storing a program to realize the function of the program switching control device on a computer-readable recording medium, and making a computer system read the program recorded on the recording medium and execute the program.

The "computer system" as used herein includes an OS and hardware such as peripheral devices. The "computer-readable recording medium" refers to a storage device such as a portable medium including a flexible disk, a magneto-optical disk, ROM, CD-ROM, etc. and a hard disk or the like built in a computer system.

Furthermore, the "computer-readable recording medium" may include a medium for dynamically retaining a program for a short period of time, e.g. for transmitting a program through a network such as the Internet or a communication line such as a telephone line, or may be a medium for retaining a program for a certain period of time, e.g. volatile memory in a computer system serving as a server or a client in such a case. Moreover, the program may be a program for implementing a part of the functions, or may be a program for implementing the functions by combining programs already recorded in a computer system.

## Claims

1. A program switching control device that controls switching of a program content targeted for reproduction by a broadcast/communication integrated receiver terminal that receives a program content currently broadcasted from a broadcasting station on a broadcast wave, and receives a program content broadcasted in the past from a first server via communications through a network and reproduces the program content on the broadcast wave or via the communications, the program switching control device comprising:
first communication unit that communicates with a second server that manages viewing histories of multiple users including a user operating the program switching control device;
different user information acquiring unit that acquires a viewing history of a different user from the second server through the first communication unit;
image generating unit that generates data about a GUI image based on the viewing history of the different user acquired by the different user information acquiring unit, the GUI image containing one or more symbols listed in chronological order corresponding to one or more respective program contents viewed by the different user;
display control unit that exerts control to output and display the data about the GUI image generated by the image generating unit;
operation accepting unit that accepts user's operation to select a certain symbol from the one or more symbols contained in the data about the GUI image output and displayed under control of the display control unit; and
second communication unit that transmits a command to the broadcast/communication integrated receiver terminal, the command instructing switch of a reproduction target of the broadcast/communication integrated receiver terminal to a program content corresponding to the certain symbol the selecting operation made for which is accepted by the operation accepting unit.

2. The program switching control device according to claim 1, wherein the different user information acquiring unit further acquires presence information indicating a program content currently viewed by the different user from the second server through the first communication unit, and
each time the different user information acquiring unit acquires the presence information, the image generating unit updates the data about the GUI image such that the data contains a symbol corresponding to a program content indicated by the presence information.

3. The program switching control device according to claim 1 or 2, wherein the program switching control device is an information processing terminal that operates in cooperation with the broadcast/communication integrated receiver terminal.

4. The program switching control device according to claim 1 or 2, wherein the program switching control device is built in the broadcast/communication integrated receiver terminal.

5. A computer program that causes a computer to function as the following component, the computer controlling switching of a program content targeted for reproduction by a broadcast/communication integrated receiver terminal that receives a program content currently broadcasted from a broadcasting station on a broadcast wave, and receives a program content broadcasted in the past from a first server via communications through a network and reproduces the program content on the broadcast wave or via the communications, the component comprising:
first communication unit that communicates with a second server that manages viewing histories of multiple users including a user operating a program switching control device;
different user information acquiring unit that acquires a viewing history of a different user from the second server through the first communication unit;
image generating unit that generates data about a GUI image based on the viewing history of the different user acquired by the different user information acquiring unit, the GUI image containing one or more symbols listed in chronological order corresponding to one or more respective program contents viewed by the different user;
display control unit that exerts control to output and display the data about the GUI image generated by the image generating unit;
operation accepting unit that accepts user's operation to select a certain symbol from the one or more symbols contained in the data about the GUI image output and displayed under control of the display control unit; and
second communication unit that transmits a command to the broadcast/communication integrated receiver terminal, the command instructing switch of a reproduction target of the broadcast/communication integrated receiver terminal to a program content corresponding to the certain symbol the selecting operation made for which is accepted by the operation accepting unit.
